# EUROPÄISCHE PATENTSCHRIFT

(11) **EP 0 814 246 B1**
(45) Veröffentlichungstag und Bekanntmachung des Hinweises auf die Patenterteilung: **16.01.2002**
(21) Anmeldenummer: 97107650.0
(22) Anmeldetag: 09.05.1997
(51) Int. Cl.: F02B 67/06, F02B 63/06

(54) **Brennkraftmaschine**
Internal combustion engine
Moteur à combustion interne

(30) Priorität: 18.06.1996 DE 19624240
(43) Veröffentlichungstag der Anmeldung: 29.12.1997
(73) Patentinhaber: DaimlerChrysler AG, 70567 Stuttgart (DE)
(72) Erfinder: Gruber, Gerhard, 71522 Backnang (DE); Hofheinz, Werner, 73207 Plochingen (DE); Klingmann, Rolf, 73655 Plüderhausen (DE); Schwiedessen, Johannes, 73732 Esslingen (DE)

(56) Entgegenhaltungen:
- DE-A- 2 064 016
- DE-A- 2 628 680
- DE-A- 4 039 206
- GB-A- 504 393
- US-A- 5 125 376
- US-A- 5 216 984
- PATENT ABSTRACTS OF JAPAN vol. 008, no. 197 (M-324), 11.September 1984 & JP 59 087283 A (TOYOTA JIDOSHA KK), 19.Mai 1984,

## Beschreibung

Die Erfindung betrifft eine Brennkraftmaschine nach der im Oberbegriff von Anspruch 1 näher definierten Art.

Hubkolben-Brennkraftmaschinen mit einer Direkteinspritzung von Kraftstoff sind sowohl in Ausführungen als Diesel-Motoren als auch in Ausführungen als Otto-Motoren aus der Praxis bekannt.

Des weiteren sind Brennkraftmaschinen mit zwei Nockenwellen bekannt (s. z.B. DE 35 34 446 C2).

Bei Diesel-Motoren wird meist eine sogenannte Hochdruckspeichereinspritzung verwendet, wobei zum Betrieb einer solchen Einspritzanlage eine sogenannte Hochdruckpumpe nötig ist, welche für die betriebsbedingten hohen Drücke zum Einspritzen des Dieselkraftstoffes sorgt, sowie eine weitere Pumpe, die als Förderpumpe bezeichnet wird und den Kraftstoff aus dem Tank des Fahrzeuges fördert und der Hochdruckpumpe zuführt, da diese in der Regel nicht selbstansaugend ist.

Des weiteren ist zum Betrieb eines Fahrzeuges und damit auch eines Dieselfahrzeuges häufig auch eine Unterdruckpumpe notwendig, welche den zur Bremskraftunterstützung notwendigen Unterdruck bereitstellt, d.h. die Unterdruckpumpe ist zur Sicherstellung eines gefahrlosen Fahrbetriebs des Fahrzeuges notwendig, da Diesel-Motoren aufgrund der fehlenden Drosselklappe den notwendigen Bremsunterdruck nicht über das Saugrohr erzeugen können.

Eine derartige, drei Pumpen, nämlich die Hochdruckpumpe, die Förderpumpe und eine Unterdruckpumpe, umfassende Anordnung kann jedoch auch bei direkteinspritzenden Otto-Motoren eingesetzt werden.

Eine Hubkolben-Brennkraftmaschine mit mehreren Pumpen ist aus der DE 43 42 802 A1 bekannt. In der genannten Druckschrift ist eine Brennkraftmaschine offenbart, an welcher außenseitig eine Kraftstoffeinspritzpumpe sowie eine Kraftstofförderpumpe und eine Ölpumpe angeordnet sind.

Nachteilig an dieser bekannten Anordnung ist jedoch, daß die Pumpen an verschiedenen Außenseiten der Brennkraftmaschine angeordnet sind und somit der Antrieb der Pumpen, der üblicherweise direkt oder indirekt durch die Hubkolben-Brennkraftmaschine erfolgt, verhältnismäßig aufwendig ist.

Der vorliegenden Erfindung liegt die Aufgabe zugrunde, eine Brennkraftmaschine vorzusehen, mittels welcher mehrere Aggregate, wie z.B. Pumpen in einfacher Weise angetrieben werden können.

Erfindungsgemäß wird diese Aufgabe durch die im Anspruch 1 genannte Merkmalskombination gelöst.

Durch die erfindungsgemäße Anordnung der Aggregate können diese in einfacher Weise z.B. über den Steuertrieb, der üblicherweise zum Antrieb der beiden Nokkenwellen der Brennkraftmaschine dient, angetrieben werden. Die Aggregate können hierbei in einfacher Weise direkt an der Brennkraftmaschine, am Zylinderkopf angebracht bzw. angeflanscht werden.

Eines der Aggregate, vorzugsweise eine Hochdruckpumpe, ist mittels eines in den Steuertrieb integrierten Antriebsrades antreibbar, wobei beispielsweise durch eine geeignete Auswahl der Zähnezahl des Antriebsrades im Falle einer Ausbildung desselben als Zahnrad die Rotationsgeschwindigkeit der Pumpenwelle und somit deren Fördermenge und/oder Förderdruck in einfacher Weise variierbar ist.

Durch die erfindungsgemäße Ausgestaltung der Brennkraftmaschine können alle zum Betrieb eines Fahrzeugmotors notwendigen Aggregate, wie z.B. Pumpen einfach und kostengünstig angetrieben werden.

Weitere vorteilhafte Ausgestaltungen der Erfindung ergeben sich aus den weiteren Unteransprüchen und aus dem nachfolgend anhand der Zeichnung prinzipmäßig beschriebenen Ausführungsbeispiel.

Es zeigt:
- Fig. 1: schematisch eine Ansicht einer Stirnseite einer erfindungsgemäßen Hubkolben-Brennkraftmaschine, und
- Fig. 2: eine dreidimensionale Ansicht einer mittels eines Gleitstückes angetriebenen Pumpe.

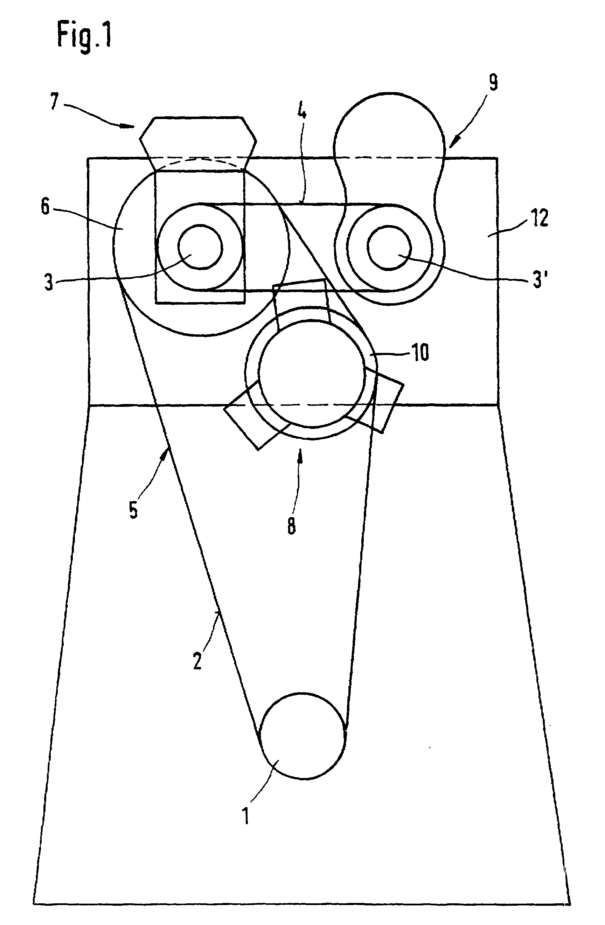

Bezug nehmend auf Fig. 1 ist eine Stirnseite einer Hubkolben-Brennkraftmaschine vereinfacht dargestellt. Die Hubkolben-Brennkraftmaschine weist in bekannter Weise eine nicht näher dargestellte Kurbelwelle auf, auf welcher beispielsweise ein Zahnrad 1 angeordnet ist, mittels welchem ein Teil des über die Kurbelwelle übertragenen Drehmoments über eine Kette 2 als Antriebsmittel einer ersten Nockenwelle 3 zugeführt wird, wobei die Nockenwelle 3 über einen Riemen 4 oder eine andere geeignete Drehmomentenübertragungseinrichtung mit einer weiteren Nockenwelle 3' wirkverbunden ist, so daß bei einer Drehbewegung des Zahnrades 1 der Kurbelwelle der Hubkolben-Brennkraftmaschine die Nockenwellen 3, 3' in Drehbewegung versetzt werden, wobei das Übersetzungsverhältnis des beschriebenen Steuertriebes 5, welcher das Zahnrad 1, die Kette 2, den Riemen 4 sowie ein zweites Zahnrad 6 auf der Nockenwelle 3 enthält, derart vorgesehen ist, daß sich die Nockenwellen 3, 3' mit der halben Drehzahl der Kurbelwelle bewegen.

Der Steuertrieb 5 kann in bekannter Weise als Kettentrieb, Riementrieb oder dergleichen ausgeführt sein.

An die dargestellte Stirnseite der Hubkolben-Brennkraftmaschine sind im Bereich des Zylinderkopfes 12 als Aggregate eine Förderpumpe 9, die beispielsweise als Zahnradpumpe ausgeführt sein kann, sowie eine Hochdruckpumpe 8, die als Kolbenpumpe ausgebildet sein kann, angeflanscht, wobei die Förderpumpe 9 und die Hochdruckpumpe 8 Bestandteile des Einspritzsystemes der Hubkolben-Brennkraftmaschine sind, wie eingangs erwähnt.

Weiterhin ist auf derselben Stirnseite der Brennkraftmaschine, auf der auch die Pumpen 8, 9 vorgesehen sind, eine Unterdruckpumpe 7 angeflanscht, welche den zur Bremskraftunterstützung eines Fahrzeuges notwendigen Unterdruck bereitstellt.

Die drei Pumpen 7, 8, 9 sind rotatorisch angetrieben wobei die Pumpenwellen der Förderpumpe 9 und der Unterdruckpumpe 7 jeweils wenigstens annähernd in Verlängerung der Nockenwellen 3, 3' angeordnet und von diesen wie nachfolgend beschrieben angetrieben sind.

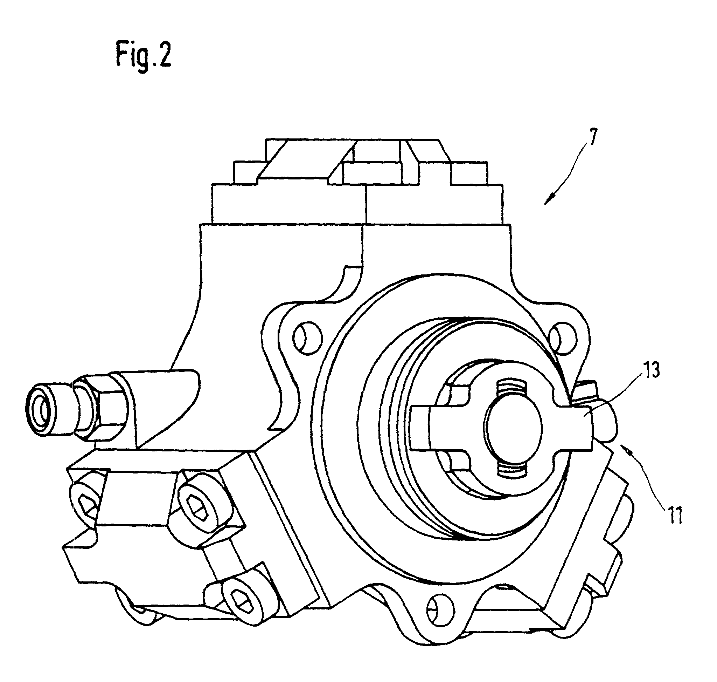

Um Fertigungstoleranzen und Desachsierungen zwischen den Nockenwellen 3, 3' und den Pumpenwellen von Unterdruckpumpe 7 und Förderpumpe 9 zu eliminieren, sind die jeweiligen Pumpenwellen mit den Nockenwellen 3, 3' über in der Fig. 2 näher dargestellte Gleitstückkupplungen 11 verbunden, so daß die Pumpen 7, 9 trotz gegebenenfalls auftretender Fertigungstoleranzen im Millimeterbereich in einfacher Weise an der Hubkolben Brennkraftmaschine angebracht werden können

Die Hochdruckpumpe 8 wird direkt über die Kette 2 des Steuertriebs 5 angetrieben, nämlich über ein mit der Pumpenwelle der Hochdruckpumpe 8 verbundenes Antriebsrad 10, das in die Kette 2 eingreift. Im Gegensatz zur festgelegten Drehzahl der Pumpenwellen der Unterdruckpumpe 7 und der Förderpumpe 9, die jeweils der Nockenwellendrehzahl und somit der halben Kurbelwellendrehzahl entspricht, kann durch entsprechende Auswahl des Durchmessers bzw. der Zähnezahl des Antriebsrades 20 die Drehzahl der Pumpenwelle der Hochdruckpumpe 8 variiert werden, d.h. durch eine geeignete Auswahl des Durchmessers des Antriebsrades 10 wird die Drehzahl der Pumpenwelle der Hochdruckpumpe 8 und somit auch der von der Hochdruckpumpe 8 erzeugbare Druck bzw. die Fördermenge bei der Montage der Brennkraftmaschine festgelegt und kann somit an unterschiedlichste Brennkraftmaschinen und Einsatzzwecke angepaßt werden.

Somit kann ein Pumpenmodell an mehrere, unterschiedliche Motoren angebaut werden, da die Pumpenleistung durch geeignete Auswahl des Durchmessers des Antriebsrades 10 an den jeweiligen Motor anpaßbar ist.

Gleitstückkupplungen 11, wie die in der Fig. 2 teilweise dargestellte, sind aus der Praxis auch unter der Bezeichnung "Kreuzscheibenkupplung" bekannt, weshalb auf die Vorteile und konstruktive Ausbildung diese. Kupplungen an dieser Stelle nicht näher eingegangen werden soll.

In Fig. 2 ist lediglich zur Verdeutlichung der Funktionsweise das Gleitstück 13 einer derartigen Kupplung dargestellt. Das Gleitstück 13 weist einen Schlitz auf, in welchen ein pumpenseitiger Mitnehmer eingreift. Wird das Gleitstück 13 in Drehbewegung versetzt und die Eingangs- und Ausgangswellen der Gleitstückkupplung 11 fluchten nicht exakt, so wird das Gleitstück 13 entsprechende Ausgleichsbewegungen zum Ausgleich des Wellenversatzes durchführen.

Das Antriebsrad 10 der Hochdruckpumpe 8 kann in einfacher Weise auf der entsprechenden Pumpenwelle selbst gelagert sein, im Gegensatz zu den mit den Nockenwellen 3, 3' verbundenen Antriebsrädern für die Förderpumpe 9 und die Unterdruckpumpe 7, welche jeweils am Zylinderkopf der Hubkolben-Brennkraftmaschine gelagert sind und das auf sie über den Steuertrieb 5 übertragene Drehmoment mittels der bereits erwähnten Gleitstückkupplungen 11 auf die jeweiligen Pumpenwellen übertragen, d.h. die dem Steuertrieb 5 zugewandten Enden der Nockenwellen 3, 3' bilden jeweils den antreibenden Teil der Gleitstückkupplung 11.

Das Antriebsrad 10 für die Hochdruckpumpe 8 kann jedoch alternativ auch über eine separate Lagerung (nicht dargestellt) im Zylinderkopf der Brennkraftmaschine gelagert sein, wobei der Antrieb der Hochdruckpumpe 8 dann ebenfalls über eine Gleitstückkupplung erfolgt.

Mit der beschriebenen Anordnung können in einfacher Weise mehrere Pumpen an einer Hubkolben-Brennkraftmaschine problemlos und kostengünstig angetrieben werden.

## Patentansprüche

1. Brennkraftmaschine mit einem Zylinderkopf und mit mindestens einer Nockenwelle, wobei an einer Stirnseite des Zylinderkopfes Antriebsmittel für die wenigstens eine Nockenwelle und weitere vom Antriebsmittel der Nockenwelle antreibbare Aggregate vorgesehen sind, wie Hochdruckpumpe, Unterdruckpumpe,
**dadurch gekennzeichnet, daß** die Anordnung zwei gemeinsame, von einem Steuertrieb (5) als Antriebsmittel antreibbare Nockenwellen aufweist, und (3,3') die Hochdruckpumpe (8) zur Kraftstoffeinspritzung, die Unterdruckpumpe (7) zur Bremskraftunterstützung und eine Förderpumpe (9) vom Antriebsmittel dieser Nockenwellen (3,3') antreibbar sind, wobei zwei der Pumpen (7,9) jeweils von einer der Nockenwellen (3,3') und die dritte Pumpe (8) von einem in den Steuertrieb (5) integrierten Antriebsrad (10) antreibbar sind.

2. Brennkraftmaschine nach Anspruch 1,
**dadurch gekennzeichnet,**
**daß** die erste Nockenwelle (3) mit dem Steuertrieb (5) direkt und die zweite Nockenwelle (3') über einen Riemen oder Kettentrieb (4) mit der ersten Nockenwelle (3) verbunden ist, wobei die Pumpen (7,8,9,) von den Nockenwellen (3,3') und dem Steuertrieb (5) aus antreibbar sind.

3. Brennkraftmaschine nach Anspruch 1 oder 2,
**dadurch gekennzeichnet, daß** die Drehmomentenübertragung auf die Aggregate über Gleitstückkupplungen (11) erfolgt.

4. Brennkraftmaschine nach Anspruch 1,
**dadurch gekennzeichnet,**
**daß** die dem Antriebsmittel (Steuertrieb (5)) zugewandten Enden der Nockenwellen (3,3') den antreibenden Teil der Gleitstückkupplung (11) bilden.

5. Brennkraftmaschine nach Anspruch 1,
**dadurch gekennzeichnet,**
**daß** die Lagerung des Antriebsrades (10) der Hochdruckpumpe (8) am Zylinderkopf (12) befestigt ist.

6. Brennkraftmaschine nach Anspruch 5,
**dadurch gekennzeichnet, daß**
das Übersetzungsverhältnis des Antriebs der Hochdruckpumpe (8) durch Anpassung des Antriebsrades (10) veränderbar ist.

## Claims

1. Internal combustion engine with a cylinder head and at least one camshaft, drive means for the at least one camshaft and other units drivable by the drive means of the camshaft, such as high-pressure pump, vacuum pump, being provided on an end face of the cylinder head,
**characterised in that** the arrangement incorporates two camshafts (3, 3') which can be commonly driven as driving means by a control drive (5), these camshafts (3, 3') being drivable by the drive means in order to drive the high-pressure pump (8) for the fuel injection, the vacuum pump (7) to assist braking and a supply pump (9), two of the pumps (7, 9) being drivable respectively by one of the camshafts (3, 3') and the third pump (8) by a gear wheel (10) integrated in the control drive (5).

2. Internal combustion engine as claimed in claim 1,
**characterised in that**
the first camshaft (3) is connected directly to the control drive (5) and the second camshaft (3') via a belt or chain drive (4) to the first camshaft (3), the pumps (7, 8, 9) being drivable by the camshafts (3, 3') and the control drive (5).

3. Internal combustion engine as claimed in claim 1 or 2,
**characterised in that**
the torque is transmitted to the units via slide couplings (11).

4. Internal combustion engine as claimed in claim 1,
**characterised in that**
the ends of the camshafts (3,3') facing the drive means (control drive (5)) form the driving part of the slide coupling (11).

5. Internal combustion engine as claimed in claim 1,
**characterised in that**
the bearing of the gear wheel (10) of the high-pressure pump (8) is secured to the cylinder head (12).

6. Internal combustion engine as claimed in claim 5,
**characterised in that**
the speed ratio of the drive of the high-pressure pump (8) can be varied by adapting the gear wheel (10).

## Revendications

1. Moteur à combustion interne, comprenant une tête de culasse et au moins un arbre à cames, dans lequel des moyens d'entraînement pour ledit au moins un arbre à cames et d'autres groupes susceptibles d'être entraînés par les moyens d'entraînement de l'arbre à cames, comme une pompe à haute pression ou une pompe à dépression, sont prévus sur une face frontale de la tête de culasse,
**caractérisé en ce que** l'agencement comprend deux arbres à cames (3, 3') en commun, susceptibles d'être entraîné par une servocommande (5) à titre de moyens d'entraînement, et **en ce que** la pompe à haute pression (8) pour l'injection de carburant, la pompe à dépression (7) pour l'assistance au freinage, et une pompe de convoyage (9) sont susceptibles d'être entraînées par les moyens d'entraînement de cet arbre à cames (3, 3'), de sorte que deux des pompes (7,9) sont entraînées respectivement par l'un des arbres à cames (3, 3'), et la troisième pompe (8) est entraînée par une roue d'entraînement (10) intégrée à 1a servocommande (5).

2. Moteur à combustion interne selon la revendication 1, **caractérisé en ce que** le premier arbre à cames (3) est relié directement à 1a servocommande (5), et le deuxième arbre à cames (3') est relié au premier arbre à cames (3) via un mécanisme à courroie ou la chaîne (4), et **en ce que** les pompes (7, 8, 9) sont susceptibles d'être entraînées par les arbres à cames (3, 3') et par la servocommande (5).

3. Moteur à combustion interne selon l'une ou l'autre des revendications 1 et 2, **caractérisé en ce que** la transmission du couple de rotation vers les groupes a lieu au moyen d'accouplements à coulisseaux (11).

4. Moteur à combustion interne selon la revendication 1, **caractérisé en ce que** les extrémités des arbres à cames (3, 3') tournée vers les moyens d'entraînement (servocommande (5)) forme la partie motrice de l'accouplement à coulisseaux (11).

5. Moteur à combustion interne selon la revendication 1, **caractérisé en ce que** le palier de la roue d'entraînement (10) de la pompe haute pression (8) est fixé sur la tête de culasse (12).

6. Moteur à combustion interne selon la revendication 5, **caractérisé en ce que** le rapport de démultiplication de l'entraînement de la pompe à haute pression (8) et variable par adaptation de la roue d'entraînement (10).
